# EUROPEAN PATENT APPLICATION

(11) **EP 4 600 119 A1**
(43) Date of publication of application: **13.08.2025**
(21) Application number: 24156452.5
(22) Date of filing: 08.02.2024
(51) Int. Cl.: B62D 21/17

(54) **CONDUCTING CHASSIS FRAME BEAM, CHASSIS AND APPLICATIONS**

(71) Applicant: VOLVO TRUCK CORPORATION, 405 08 Göteborg (SE)
(72) Inventor: LENNEVI, Jerker, 443 92 Lerum (SE); HOEVENAARS, Erik, 411 31 Göteborg (SE)
(74) Representative: Zacco Sweden AB

(57) **Abstract**

A chassis frame beam (1), wherein at least a part of the beam (1) is conducting and comprises a conductor part (2) comprising a conductive material and an insulation layer (3) surrounding the conductive material to prevent current from flowing from the conductor part (2) to the remainder of the beam (1), wherein an opening (4) in the conductor part (2) is arranged to connect the conductor part (2) to an electrical source and/or load to form an electric circuit, wherein the conductor part (2) of the beam (1) carries current in the electric circuit.

## Description

### TECHNICAL FIELD

The disclosure relates generally to vehicle or industrial machine chassis. In particular aspects, the disclosure relates to a conducting chassis frame beam, chassis and applications. The disclosure can be applied to heavy-duty vehicles, such as trucks, buses, and construction equipment, among other vehicle types as well as industrial machines. Although the disclosure may be described with respect to a particular vehicle, the disclosure is not restricted to any particular vehicle.

### BACKGROUND

Commercial vehicles such as busses and trucks tend to have a chassis frame, comprising a left and a right beam, to provide torsional stiffness and a carrying function for heavy vehicles that can be loaded with duties up to multiple times the vehicle weight. These beams tend to be designed to fit an ICE powertrain and fuel tanks quite well. However, in a Battery Electric Vehicle (BEV), these beams run through the space for the battery packs.

Furthermore, main high voltage Direct Current (DC) cables are harder to route from left to right due to these frame beams.

The disclosed technology seeks to mitigate, obviate, alleviate, or eliminate various issues known in the art that affect the ability of providing vehicles with an improved chassis frame.

### SUMMARY

A first aspect of the disclosure relates to a chassis frame beam, wherein at least a part of the beam is conducting and comprises a conductor part comprising a conductive material and an insulation layer surrounding the conductive material to prevent current from flowing from the conductor part to the remainder of the beam. An opening in the conductor part is arranged to connect the conductor part to an electrical source and/or load to form an electric circuit, wherein the conductor part of the beam carries current in the electric circuit. The first aspect of the disclosure may seek to improve the space available in a chassis by reusing a part of the structure of the chassis frame to transport electrical energy and to connect different parts of a high voltage system. A technical benefit may include that, commercial electrical vehicles could be designed with a larger electrical range as more room would be available for additional batteries. The chassis frame beam of the first aspect eliminates the need for separate high voltage cables. This creates more space for energy storage and thus enlarges the battery electric range. Traditional cables tend to take extra space for routing and traditional beams tend to take space away from energy storage. By combining a current carrying conductive function of the cables in the chassis beams and forming a more compact installation, a higher energy storage capacity can be achieved.

The same advantages can be achieved for an industrial machine, where the chassis can be made smaller due to the inclusion of chassis frame beams according to the first aspect. Alternatively, more space can be made available also in industrial machine chassis, such that additional equipment can be installed inside the same chassis.

Optionally in some examples, including in at least one preferred example, the chassis frame beam further comprises insulated beam openings to install mechanical loads without creating electrical contact between the insulated beam openings and the conductor part. A technical benefit may include safe mounting of mechanical loads to the chassis frame beam without risking that electrical power is led the mechanical load.

Optionally in some examples, including in at least one preferred example, the chassis frame beam comprises one conductor part. Optionally in some examples, including in at least one preferred example, the chassis frame beam comprises at least two conductor parts. A technical benefit may include that the chassis frame beam can be adapted to a desired design. Depending on the type of application (vehicle chassis/industrial machine chassis), one or more conductor part can be made available for providing pathways for electrical power.

Optionally in some examples, including in at least one preferred example, the chassis frame beam comprises a positively charged conductor part and a negatively charged conductor part. The positively charged conductor part may be arranged in a front part of the chassis frame beam and the negatively charged conductor part may be arranged in a rear part of the chassis frame beam or vice versa. A technical benefit may include additional freedom of designing a chassis according to where the electrical power is needed.

Optionally in some examples, including in at least one preferred example, the conductor part is arranged on the outside of the chassis frame beam. A technical benefit may include that it is possible to make a smaller chassis frame beam conductive, or to add material such that a desired amount of current can be transported in the chassis frame beam.

A second aspect of the disclosure relates to a chassis comprising a chassis frame beam according to the first aspect. The second aspect of the disclosure may seek to provide a chassis that can be designed with greater space for batteries for an electric vehicle or a chassis that may hold additional equipment or be made smaller for an industrial machine. A technical benefit may include increased range for electric vehicles and smaller chassis for industrial machines.

Optionally in some examples, including in at least one preferred example, a left beam and/or a right beam comprises the conductor part. A technical benefit may include that any beam may hold the conductor part. This is useful for design purposes. If a chassis comprises both a left and a right beam comprising a conductor part, the left and right beam may form a complete circuit.

Optionally in some examples, including in at least one preferred example, a cross beam comprises the conductor part. A technical benefit may include that power may be routed from one side to another through the cross beam. Alternatively, the cross beam may be a separate circuit that can also hold a mechanical load.

A third aspect of the disclosure relates to a vehicle comprising a chassis according to the second aspect. The third aspect of the disclosure may seek to provide a vehicle that can be designed with greater space for batteries. A technical benefit may include increased range for electric vehicles but also additional freedom for designing vehicles with a combustion engine. The vehicle may be a road vehicle, a truck, a bus, or a construction equipment. The vehicle may alternatively be a boat or ship for recreational or professional use or a marine vessel such as a tanker, a freighter, a barge, or any other watercraft which transports solid or liquid freight. In case of an electric vehicle, it may be a fuel cell electric vehicle, a plug-in hybrid electric vehicle, a battery electric vehicle or a hybrid electric vehicle. Of course, other alternative power sources may be conceivable.

A fourth aspect of the disclosure relates to an industrial machine comprising a chassis according to the second aspect. The fourth aspect of the disclosure may seek to provide an industrial machine that can be designed with additional space for additional equipment or that can be designed with a smaller chassis due to some electrical equipment being able to be fitted in a different way than today.

A fifth aspect of the disclosure relates to a system comprising a chassis frame beam according to the first aspect and an electrical source and/or load arranged to connect to the conductor part to form an electric circuit. The fifth aspect of the disclosure may seek to provide a system that utilizes the conductor inside the chassis frame beam to provide a more versatile way to design a chassis. A technical benefit may include increased range for electric vehicles or smaller chassis or chassis with increased capacity for additional equipment for industrial machines.

Optionally in some examples, including in at least one preferred example, the chassis frame beam further comprises insulated beam openings to install a mechanical load, wherein the electrical source and/or load is arranged in the mechanical load and wherein the insulated beam openings are arranged such that electrical contact between the beam openings and the conductor part cannot be created. A technical benefit may include faster assembly and disassembly of the high voltage system, allowing for better access points, leading to better aftermarket repair times.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary chassis frame beam according to a first example,
Fig. 2 is an exemplary chassis frame beam according to a second example,
Fig. 3 is an exemplary chassis frame beam according to a third example,
Fig. 4 is an exemplary vehicle chassis comprising chassis frame beams according to the first aspect.

### DETAILED DESCRIPTION

The detailed description set forth below provides information and examples of the disclosed technology with sufficient detail to enable those skilled in the art to practice the disclosure.

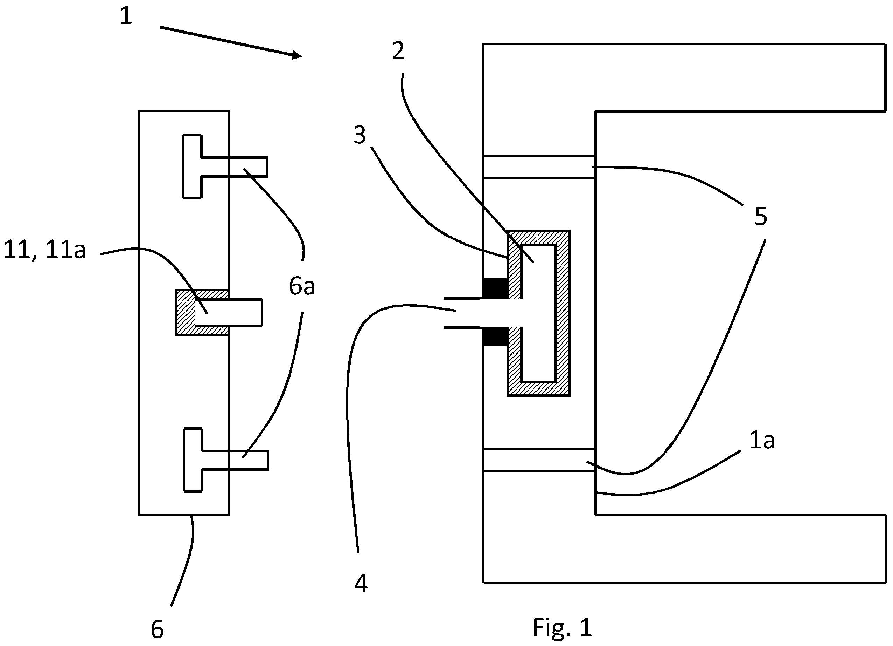

Fig. 1 is an exemplary chassis frame beam 1 according to a first example. Fig. 1 show a chassis frame beam 1 containing a conductor part 2 arranged inside a web 1a of the chassis frame beam 1. In the example of figure 1, the chassis frame beam 1 is a parallel flange channel, but different types of beams can be used such as I beams, H beams, universal beams, universal columns etc. The conductor part 2 comprises a conductive material and an insulation layer 3 surrounding the conductive material to prevent flow of current from the conductor part 2 to the chassis frame beam 1. I.e., the insulation layer 3 prevents current from flowing from the conductor part 2 of the beam 1 to the remainder of the beam 1. With remainder of the beam 1 is meant the part of the beam 1 that is outside of the insulation layer 3.

The conductor part 2 may be an integrated part of the beam 1 with the insulation layer 3 being arranged around the conductor part 2. This means that the conductive material of the conductor part 2 is part of the beam 1 and thereby made of the same material. Alternatively, the conductor part 2 may be placed in a space in the beam 1. In this case, the conductor part 2 is solid in order to simplify assembly of the beam 1.

Fig. 1 further shows an opening 4 in the conductor part 2 arranged to connect the conductor part 2 to an electrical source and/or load to form an electric circuit. The conductor part 2 of the chassis frame beam 1 carries current in the electric circuit.

The chassis frame beams 1 can thus be used to electrically connect different sources or loads to create an electric circuit using the chassis frame beam 1 as a current carrying conductor. The opening 4 in the conductor part 2 is insulated from the conductor part 2 by any suitable means.

Fig. 1 further shows insulated beam openings 5 that can be used to install a mechanical load 6 without creating electrical contact between the mechanical load 6 and the chassis frame beam 1 or between mechanical fasteners 6a and the chassis frame beam 1. The mechanical load 6 can for instance be a suspension or a cabin. Mechanical fasteners 6a such as screws are used to install the mechanical load 6. The insulated beam openings 5 are in the example of Fig. 1 arranged outside the conductor part 2. Alternatively, the insulated beam openings 5 could run through the conductor part 2.

In figure 1, an electrical source and/or load 11 is arranged in the mechanical load 6. The insulated beam openings 5 are arranged such that electrical contact between the insulated beam openings 5 and any of the first and second conductor parts 2a, 2b cannot be created.

The electrical source and/or load 11 is so constructed that a circuit is closed when the mechanical load 6 is attached to the chassis frame beam 1. In figure 1, only one conductor part 2 is shown, another oppositely charged conductor part is needed to be connected to the electrical source and/or load 11 in order to close the circuit.

In fig. 1, the electrical source and/or load 11 is illustrated by connections 1 1a, 11b that are insulated, and by connecting the mechanical load 6 to the chassis frame beam 1 using the mechanical fasteners 6a, the connection 11a connect with the conducting parts 2.

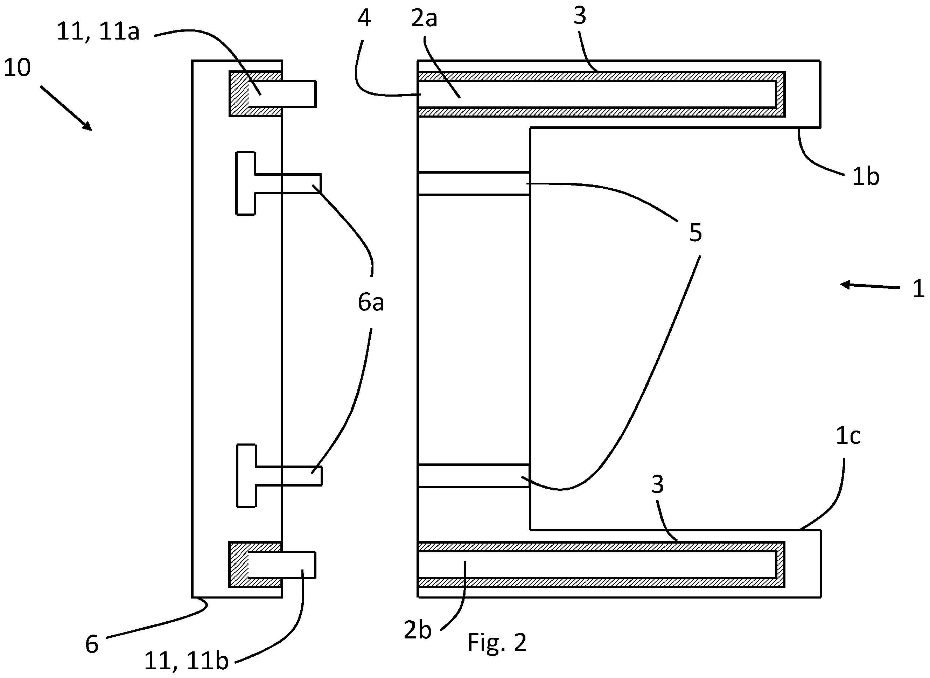

Fig. 2 is an exemplary chassis frame beam 1 according to a second example. Fig. 2 shows a chassis frame beam 1 containing two conductor parts 2a, 2b arranged inside the flanges 1b, 1c of the chassis frame beam 1 with insulation layers 3 covering internal parts of the conductor parts 2a, 2b. A first conductor part 2a is arranged at an upper flange 1b and a second conductor part 2b is arranged at a lower flange 1c.

Similar to figure 1, the first and second conductor parts 2a, 2b comprise a conductive material and an insulation layer 3 surrounding the conductive material to prevent flow of current from the conductor part 2 to the chassis frame beam 1 with the exception of the openings 4.

As in figure 1, figure 2 shows an electrical source and/or load 11 is arranged in the mechanical load 6. The insulated beam openings 5 are arranged such that electrical contact between the insulated beam openings 5 and any of the first and second conductor parts 2a, 2b cannot be created.

The electrical source and/or load 11 is so constructed that a circuit is closed when the mechanical load 6 is attached to the chassis frame beam 1. If the chassis frame beam 1 comprises multiple current carrying conductor parts 2, each vehicle side can form a closed circuit. One advantage is that small components can be connected to only one frame beam and receive power.

Fig. 2 further shows a system 10 comprising the chassis frame beam 1 and the electrical source and/or load 11 arranged to connect to the conductor part 2 to form an electric circuit. In fig. 2, the electrical source and/or load 11 is illustrated by connections 11a, 11b that are insulated, and by connecting the mechanical load 6 to the chassis frame beam 1 using the mechanical fasteners 6a, the connections 11a connect with the conducting parts 2a, 2b to form a closed circuit.

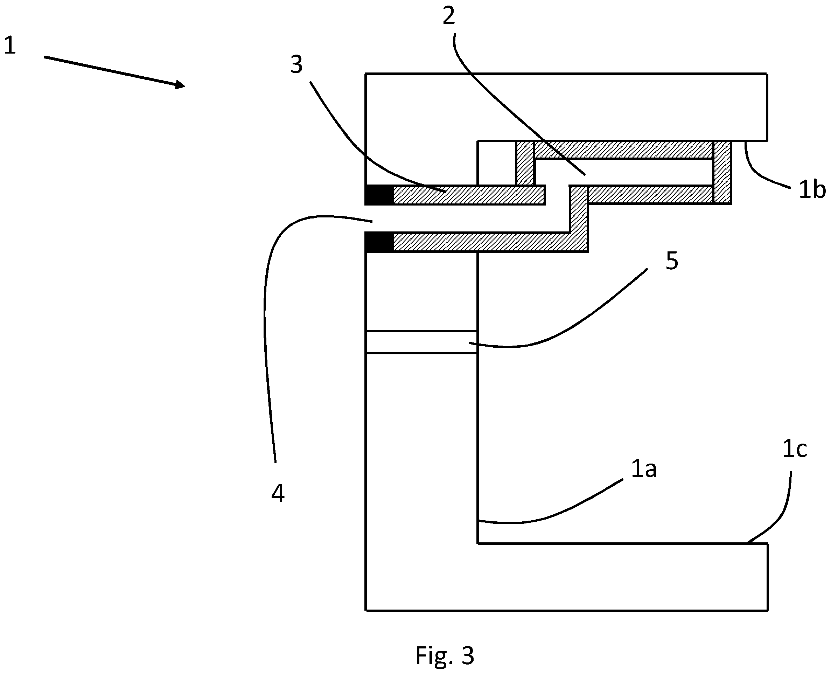

Fig. 3 is an exemplary chassis frame beam 1 according to a third example. In fig. 3, the conductor part 2 is mounted on an outside part of the web 1a/flanges 1b, 1c of the chassis frame beam 1. In the example of fig. 3, the conductor part 2 is mounted on the upper flange of the chassis frame beam 1. Insulation 3 and openings 4 to connect the conductor part 2 to an electrical load are adapted to function in the same way as in the previous figs. 1 and 2.

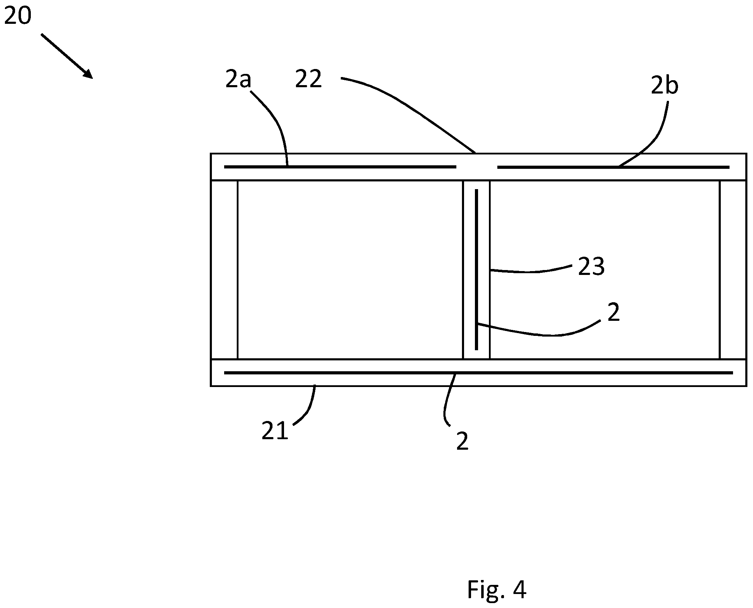

Fig. 4 is an exemplary vehicle chassis 20 comprising chassis frame beams 1 according to the first aspect. In fig. 4, the chassis comprises a left chassis frame beam 1, a right chassis frame beam 1 and a cross chassis frame beam 1.

The left chassis frame beam 21, right chassis frame beam 22 and the cross chassis frame beam 23 all comprise conductor parts 2 that can be used to connect to an electrical source and/or load in order to save wiring. In this way, a lot of wiring can be removed and space can be freed up. In the example of figure 4, the left chassis frame beam 21 and cross chassis frame beam 23 comprise one conductor part 2. The right chassis frame beam 22 comprises a first conductor part 2a in a front part of the right chassis frame beam 22 and a second conductor part 2b in a rear part of the right chassis frame beam 22. The first conductor part 2a in the front part of the right chassis frame beam 22 may be a positively charged conductor part 2a and the second conductor part 2b in the rear part of the right chassis frame beam 22 may be a negatively charged conductor part 2b, or vice versa.

In other examples, one or more of the conductor parts can be connected to form one larger circuit running through the entire chassis. In a further example, one pair of conductor parts may for instance be used for low voltage equipment while another pair of conductor parts may for instance be used for high voltage equipment.

When designing the chassis, optional cross members between the beams may provide additional torsional stiffness to the chassis. Pending installation/mounting these can be covered with or without an insulation layer.

Each chassis frame beam can have several conductive parts in a length direction, with e.g. one or more positively charged conductive parts in a front part of the chassis frame beam 1 and one or more negatively charged conductive parts in a rear part of the chassis frame beam 1 or vice versa or positively charged conductive parts and negatively charged conductive parts mixed in the chassis frame beam. In another example, a chassis frame beam may comprise a positively charged conductive part running the entire length or most of the length of the chassis frame beam with a negatively charged conductive part placed above, below and/or or to one side of the positively charged conductive part such that small equipment can be connected to both the positively and negatively charged conductive parts in one chassis frame beam.

Different chassis frame beams can be differently charged. E.g., one or more frame beams can comprise only positively charged conductive parts and one or more frame beams can comprise only negatively charged conductive parts.

According to one example, the one or more conductor parts are embedded in isolating material that is vulcanized to the frame beam. A conductor part can be placed either internally as in figure 1 or in a duct or to a dedicated part of the surface of the frame beam.

Example 1: A chassis frame beam, wherein at least a part of the beam is conducting and comprises a conductor part consisting of a conductive material and an insulation layer surrounding the conductive material to prevent current from flowing from the conductor part to the remainder of the beam, wherein an opening in the conductor part is arranged to connect the conductor part to an electrical source and/or load to form an electric circuit, wherein the conductor part of the beam carries current in the electric circuit.

Example 2: The chassis frame beam according to example 1, wherein the chassis frame beam further comprises insulated beam openings to install mechanical loads without creating electrical contact between the insulated beam openings and the conductor part.

Example 3: The chassis frame beam according to example 1 or 2, wherein the chassis frame beam comprises one conductor part.

Example 4: The chassis frame beam according to example 1 or 2, wherein the chassis frame beam comprises at least two conductor parts.

Example 5: The chassis frame beam according to example 4, wherein the chassis frame beam comprises a positively charged conductor part and a negatively charged conductor part.

Example 6: The chassis frame beam according to example 5, wherein the positively charged conductor part is arranged in a front part of the chassis frame beam and the negatively charged conductor part is arranged in a rear part of the chassis frame beam or vice versa.

Example 7: A chassis frame beam according to any one of the preceding examples, wherein the conductor part is arranged on the outside of the chassis frame beam.

Example 8: A chassis comprising a chassis frame beam according to any one of the preceding examples.

Example 9: The chassis according to example 8, wherein a left beam and/or a right beam comprises the conductor part.

Example 10: The chassis according to example 8 or 9, wherein a cross beam comprises the conductor part.

Example 11: A vehicle comprising a chassis according to any one of examples 8-10.

Example 12: The vehicle according to example 11, wherein the vehicle is a road vehicle, a truck, a bus, or a construction equipment.

Example 13: The vehicle according to example 11, wherein the vehicle is a boat.

Example 14: The vehicle according to any one of examples 11-13, wherein the vehicle is an electric vehicle.

Example 15: An industrial machine comprising a chassis according to any one of examples 8-10.

Example 16: A system comprising a chassis frame beam according to any one of examples 1-7 and an electrical source and/or load arranged to connect to the conductor part to form an electric circuit.

Example 17: The system according to claim 16, wherein the chassis frame beam further comprises insulated beam openings to install a mechanical load, wherein the electrical source and/or load is arranged in the mechanical load and wherein the insulated beam openings are arranged such that electrical contact between the beam openings and the conductor part cannot be created.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A chassis frame beam (1), wherein at least a part of the beam (1) is conducting and comprises a conductor part (2) comprising a conductive material and an insulation layer (3) surrounding the conductive material to prevent current from flowing from the conductor part (2) to the remainder of the beam (1), wherein an opening (4) in the conductor part (2) is arranged to connect the conductor part (2) to an electrical source and/or load to form an electric circuit, wherein the conductor part (2) of the beam (1) carries current in the electric circuit.

2. The chassis frame beam (1) according to claim 1, wherein the chassis frame beam (1) further comprises insulated beam openings (5) to install mechanical loads (6) without creating electrical contact between the insulated beam openings (5) and the conductor part (2).

3. The chassis frame beam (1) according to claim 1 or 2, wherein the chassis frame beam (1) comprises one conductor part (2).

4. The chassis frame beam (1) according to claim 1 or 2, wherein the chassis frame beam (1) comprises at least two conductor parts (2).

5. The chassis frame beam (1) according to claim 4, wherein the chassis frame beam (1) comprises a positively charged conductor part (2) and a negatively charged conductor part (2).

6. The chassis frame beam (1) according to claim 5, wherein the positively charged conductor part (2) is arranged in a front part of the chassis frame beam (1) and the negatively charged conductor part (2) is arranged in a rear part of the chassis frame beam (1) or vice versa.

7. A chassis frame beam (1) according to any one of the preceding claims, wherein the conductor part (2) is arranged on the outside of the chassis frame beam (1).

8. A chassis comprising a chassis frame beam (1) according to any one of the preceding claims.

9. The chassis according to claim 8, wherein a left chassis frame beam (1) and/or a right chassis frame beam (1) comprises the conductor part (2).

10. The chassis according to claim 8 or 9, wherein a cross beam (1) comprises the conductor part (2).

11. A vehicle comprising a chassis according to any one of claims 8-10.

12. The vehicle according to claim 11, wherein the vehicle is a road vehicle, a truck, a bus, or a construction equipment.

13. The vehicle according to claim 11, wherein the vehicle is a boat, ship or other marine vessel.

14. The vehicle according to any one of claims 11-13, wherein the vehicle is an electric vehicle.

15. An industrial machine comprising a chassis according to any one of claims 8-10.

16. A system (10) comprising a chassis frame beam (1) according to any one of claims 1-7 and an electrical source and/or load (11) arranged to connect to the conductor part (2) to form an electric circuit.

17. The system (10) according to claim 16, wherein the chassis frame beam (1) further comprises insulated beam openings (5) to install a mechanical load (6), wherein the electrical source and/or load (11) is arranged in the mechanical load (6) and wherein the insulated beam openings (5) are arranged such that electrical contact between the beam openings (5) and the conductor part (2) cannot be created.
